# EUROPEAN PATENT APPLICATION

(11) **EP 0 689 826 A1**
(43) Date of publication of application: **03.01.1996**
(21) Application number: 95102426.4
(22) Date of filing: 21.02.1995
(51) Int. Cl.: A61J 17/00, G01K 13/00

(54) **Thermometric pacifier and nipple for infants**

(30) Priority: 26.06.1994 IL 11012594
(71) Applicant: Cohen, Fredie, Rehovot 76289 (IL)
(72) Inventor: Cohen, Fredie, Rehovot 76289 (IL)
(74) Representative: Benedum, Ulrich Max, Dr.

(57) **Abstract**

Pacifier and/or nipple for feeding bottles, having incorporated in its production material temperature sensitive substances that change their colour or become transparent in accordance with the temperature, which passively and continuously displays the monitored temperature by an analog, digital or combined display.

## Description

The invention relates to a method for displaying the temperature of an oral object such as a pacifier or nipple for feed-bottles. The invention relates in particular to a thermometric pacifier and/or nipple for feeding-bottles which displays the temperature of the food-stuff.

It is well known to every parent and nurse (hereinafter collectively referred to as "nurse") that it is important to detect early a rise in the body-temperature of a baby or infant. When a nurse is taking care of a healthy infant she will normally check his body temperature a few times a week. In the case of a sick baby or infant, she will usually check his temperature several times a day. At present, the common method for measuring a body temperature of a child is rectal, using a mercurial or electronic thermometer. This method is associated with discomfort for the child, and in many cases it will be found that the check was unnecessary and the child in good health.

Furthermore, it is known to be important in relation to babies and infants to check the temperature of the food and to ensure that it is within a proper range. To do that, the nurse usually drips several drops of the food on the inner part of her arm or tastes the food herself. Apart from this being a subjective and inaccurate method, the dripping of the food may involve discomfort and prior tasting is unhygienic as germs may be transferred in this way to the child.

It is an object of the invention to provide an improved means and method for a continuous checking of the temperature of an oral object, which is hygienic and causes no discomfort to the child.

This object is achieved by a method as disclosed in claim 1 and by thermometric pacifiers and nipples for feeding-bottles as disclosed in claim 2. Preferred embodiments of the invention are described in the examples.

The object is basically achieved by incorporating temperature sensitive substances, that change their colour or become transparent in accordance with the temperature, into the production materials of which pacifiers and feeding nipples are made, which substances can thus continuously and permanently provide a passive display (no electric power or batteries required) of the monitored temperature.

The invention is further directed to a pacifier and/or nipple for feeding bottles, which has incorporated in its production material temperature sensitive substances that change their colour or become transparent in accordance with the temperature, which pacifier and/or nipple displays permanently and continuously in an analog, digital or combined passive display the monitored temperature.

The invention thus provides a means and a method for continuously monitoring the body temperature of a baby or infant which method is also applicable when the child is asleep. The temperature display can be analog and/or digital (as described further on) by changing the colour of the whole pacifier or a part of it. This part can have the shape of numbers or letters or be a pictogram or icon for example that of a thermometer. This colour change is achieved by incorporating liquid crystals in the pacifier or nipple material, which liquid crystals change their colour in accordance with their temperature or the temperature of the surrounding material. Each temperature may have its own colour.

In another embodiment the oral object is a feeding nipple which displays the temperature of the food with which it is in contact. Also in this embodiment the temperature display can be analog and/or digital (as described further on) by changing the colour of the whole nipple or a part of it. The invention thus displays continuously during the feeding the monitored temperature in an accurate, objective and hygienic way.

The colour change is achieved by the incorporation of liquid crystals in the nipple or pacifier material. The liquid crystals in this material change their colour in accordance with the temperature of the surrounding material.

Liquid crystals in this connection are temperature sensitive particles, that change their colour with accordance to the temperature. The corresponding substances and their properties are well known and widely used in other applications to quickly indicate a temperature.

The pacifiers and the nipples are made of transparent or semi-transparent materials such as silicone, latex and such like. An appropriate incorporation of the said crystals into the material of which the pacifiers and nipples are made, can provide a temperature display which changes its colour in accordance with its temperature.

In use, the pacifier preferably displays the temperature in four ranges or more, such as:

| | |
|---|---|
| Low temperature | 34 - 36 °C |
| Normal temperature | 36 - 36.9 °C |
| Fever | 37 - 38 °C |
| High fever | > 38.1 °C. |

In case of fever and high fever a rectal temperature check is recommended.

In the case of a feeding nipple, the temperature of the food in contact therewith is displayed preferably at minimum in four ranges such as:

| | |
|---|---|
| Cold | < 30 °C |
| Tepid | 30 - 34 °C |
| Desired temperature | 35 - 38 °C |
| Hot | 38 - 42 °C |
| Very hot | > 43 °C |

The display is based on three options, each of them separate or with any possible combination(s) within the options.
- Option 1.: Colour Display - One specified colour for each temperature.
- Option 2.: Digital Display - Numbers appear under the specified temperature.
- Option 3.: Analog Display - Pictures, icons and symbols (pictogram of thermometer, sun, etc.) appear under the specified temperature.

It is up to the designer or manufacturer to specify an appropriate number of ranges, the graphic designs and symbols and the display in total. The above description is for illustration purposes only.

It is also recommended to print detailed instructions on the package of each individual article. The pacifier and nipple according to the invention is completely interchangeable with shapes, dimensions and functions of existing products in the market.

Use of the articles according to the invention is not limited and is preferably not bound to special care. Also cleaning and sterilization should be as usual.

The shelf life of the articles according to the invention is preferably unlimited as long as the package remains unopend. For steril packed products, the sterilization life will become relevant. Other physical properties such as strength, flexibility, elasticity, elongation, durability, etc. should not differ from existing products. This applies also to configurations and designs. There should be preferably no additional limitation to existing products in this field.

## Claims

1. Incorporation of temperature sensitive substances that change their colour or become transparent in accordance with their temperature into the production materials of which pacifiers and feeding nipples are made, to provide a passive, continuous, permanent display of the monitored temperature.

2. Pacifier and/or nipple for feeding bottles, having incorporated in its production material temperature sensitive substances that change their colour or become transparent in accordance with the temperature, which passively and continuously displays the monitored temperature by an analog, digital or combined display.
